# NOUVEAU FASCICULE DE BREVET EUROPEEN

(11) **EP 2 688 853 B2**
(45) Date de publication et mention de la décision concernant l'opposition: **03.07.2019**
(45) Mention de la délivrance du brevet: 06.07.2016
(21) Numéro de dépôt: 12717370.6
(22) Date de dépôt: 23.03.2012
(51) Int. Cl.: C03C 17/36, C03C 17/34, E06B 3/67, B32B 17/10

(54) **VITRAGE MULTIPLE ISOLANT COMPRENANT DEUX EMPILEMENTS BAS EMISSIFS**
MEHRFACHE ISOLIERVERGLASUNG MIT ZWEI STAPELN VON GERINGER EMISSIVITÄT
INSULATING MULTIPLE GLAZING INCLUDING TWO LOW-EMISSIVITY STACKS

(30) Priorité: 25.03.2011 FR 1152516
(43) Date de publication de la demande: 29.01.2014
(73) Titulaire: Saint-Gobain Glass France, 92400 Courbevoie (FR)
(72) Inventeur: GERARDIN, Hadia, F-75012 Paris (FR); REYMOND, Vincent, F-92160 Antony (FR)
(74) Mandataire: Saint-Gobain Recherche
(86) Numéro de dépôt international: PCT/FR2012/050613
(87) Numéro de publication internationale: WO 2012/131243

(56) Documents cités:
- DE-U1- 9 014 083
- US-A1- 2006 090 834
- US-A1- 2006 115 655
- US-A1- 2010 326 817
- "Verglasungen mit Wärmedämmschicht auf der Außenseite" In: Hans Joachim Gläser: "Dünnfilmtechnologie auf Flachglas", 1999, Verlag Karl Hofmann, XP007919680, ISBN: 3-7780-1041-7 pages 185-200, le document en entier
- DATABASE WPI Week 200442 Thomson Scientific, London, GB; AN 2004-444484 XP002662756, -& JP 2004 149400 A (ASAHI GLASS CO LTD) 27 mai 2004 (2004-05-27)

## Description

L'invention concerne des vitrages multiples, en particulier les doubles vitrages ou triples vitrages pour le domaine du bâtiment, ledit vitrage comprenant une couche fonctionnelle de type métallique pouvant agir sur le rayonnement solaire et/ou le rayonnement infrarouge de grande longueur d'onde.

L'invention concerne plus particulièrement des vitrages d'isolation thermique renforcée présentant un facteur solaire élevé, et donc destinés principalement aux climats froids.

Ces vitrages sont destinés à équiper plus particulièrement les bâtiments, en vue notamment de diminuer l'effort de chauffage en hiver (vitrages dits «bas-émissifs») et de maximiser l'apport solaire gratuit.

Dans de tels vitrages, par exemple un double vitrage, deux substrats en verre sont maintenus à distance par des espaceurs, de manière à délimiter une cavité remplie par un gaz isolant qui peut être de l'air, de l'argon ou du Krypton. Un double vitrage est donc composé de deux feuilles (substrats) de verre séparées par une lame de gaz. On désigne ainsi par la séquence 4/12/4 un double vitrage composé de deux feuilles de 4 mm d'épaisseur et d'une lame de gaz de 12 mm.

De manière conventionnelle, les faces d'un double vitrage sont désignées à partir de l'extérieur du bâtiment. Un double vitrage comporte ainsi 4 faces, la face 1 est à l'extérieur du bâtiment (et constitue donc la paroi extérieure du vitrage), la face 4 à l'intérieur du bâtiment (et constitue donc la paroi intérieure du vitrage), les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

De façon connue, les doubles vitrages à isolation thermique renforcée ou vitrages isolants (souvent appelés aussi DGU pour Double Glazing Unit selon le terme anglais) comprennent un empilement de couches dit à propriété bas émissive ou low-e incorporant au moins une couche métallique fonctionnelle à propriétés de réflexion dans l'infrarouge et/ou dans le rayonnement solaire, notamment au moins une couche fonctionnelle métallique à base d'argent ou d'alliage métallique contenant de l'argent. Cet empilement est classiquement déposé en face 2 ou 3 du double vitrage.

Dans ce type d'empilement, la couche fonctionnelle se trouve le plus souvent disposée entre deux revêtements antireflets comportant chacun en général plusieurs couches qui sont chacune en un matériau diélectrique du type nitrure (et notamment nitrure de silicium ou d'aluminium) ou oxyde.

Des exemples de doubles vitrages équipés de telles couches sont par exemple décrits dans les publications WO 2007/101964, EP877005, EP718250, FR2856627, EP 847965, EP 183052, EP226993.

La publication US 2006/115655 décrit un double vitrage à propriétés d'isolation thermique incorporant deux empilements bas émissifs.

Actuellement, un tel empilement de couches est déposé sur un des substrats verriers du double vitrage dans une même installation de dépôts de couches par pulvérisation cathodique assistée par champ magnétique à partir de cibles constituées du matériau à déposer ou à partir d'une cible métallique dans une atmosphère réactive. Un tel procédé est appelé dans le domaine procédé de dépôt « magnétron ».

La performance d'isolation thermique de ces vitrages est mesurée selon les techniques de l'art par le coefficient de transfert thermique U, qui désigne la quantité de chaleur traversant le vitrage par unité de surface et pour une différence de température unitaire entre les deux faces du vitrage. Dans un double vitrage isolant, on cherche donc à minimiser les transferts de chaleur de l'extérieur vers l'intérieur, c'est-à-dire à minimiser le facteur U.

Le coefficient U est mesuré au sens de l'invention selon les conditions décrites dans la norme internationale ISO 10292.

Un autre paramètre permettant de mesurer la qualité d'un double vitrage est le facteur solaire FS. Il est défini comme le rapport entre l'énergie entrant dans le local par le vitrage et l'énergie solaire incidente. Il peut être calculé par la somme du flux énergétique transmis directement à travers le vitrage et du flux énergétique absorbé puis réémis vers l'intérieur par le vitrage.

Le coefficient FS est mesuré au sens de l'invention selon les conditions décrites dans la norme internationale ISO 9050.

De façon connue, les doubles vitrages isolants actuels comportent le plus souvent un empilement de couches du type bas émissif comprenant le plus souvent au moins une couche en argent en face 2 ou le plus souvent en face 3 du DGU, afin de limiter les transferts radiatifs. La présence de cette couche bas-émissive a aussi pour conséquence d'abaisser le facteur solaire, en particulier si elle est positionnée en face 2 du double vitrage.

A titre d'exemple, les caractéristiques d'un empilement commercial utilisé à l'heure actuelle et incorporant une couche fonctionnelle d'argent, ainsi que les performances énergétiques et optiques obtenues pour un double vitrage 4/16/4, 90% Ar, comprenant cet empilement sur sa face 2 ou 3, sont regroupés dans le tableau 1 suivant :

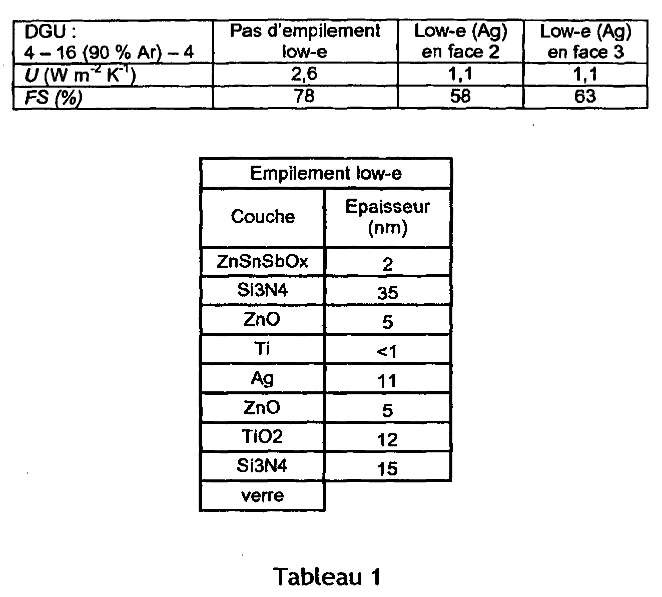

On connait également de l'art des DGU dans lesquels l'empilement low-e comprend une couche fonctionnelle à propriétés de réflexion dans l'infrarouge et/ou dans le rayonnement solaire qui n'est pas métallique mais un oxyde transparent conducteur (TCO), notamment du type ITO (oxyde mixte d'indium et d'étain) ou SnO2: F (oxyde d'étain dopé fluor). Les performances énergétiques et optiques obtenues pour des DGU classiques avec ou sans empilement incorporant une couche fonctionnelle du type SnO2:F (oxyde d'étain) dopé avec 1 % atomique de fluor d'épaisseur 320 nm sont donnés dans le tableau 2 suivant :

**Tableau 2**

| DGU: 4 - 16 (90 % Ar) - 4 | Pas de low-E | Low-e (TCO) face 2 | Low-e (TCO) face 3 | Low-e (TCO) face 4 |
|---|---|---|---|---|
| *U* (W m⁻² K⁻¹) | 2,6 | 1,5 | 1,5 | 2,1 |
| *FS (%)* | 78 | 70 | 77 | 73 |

On voit que lorsque la couche fonctionnelle est du type TCO, le facteur U de transmission énergétique est plus élevé que dans le cas d'une couche fonctionnelle métallique, en raison d'une émissivité plus importante des couches fonctionnelles. On observe également que le Facteur Solaire est peu affecté par la présence d'une telle couche fonctionnelle en TCO lorsqu'elle est déposée en face 3.

Il a également été proposé, notamment dans la demande EP 637572 A1, des doubles vitrages comprenant une association de deux empilements sur des faces différentes du vitrage. Selon cette publication, il est possible de diminuer encore le facteur de transmission énergétique et d'obtenir des DGU de U = 1,1, en disposant un premier empilement low-e comprenant une couche d'argent disposé en face 3 du double vitrage, dont l'action est complétée par une autre couche low-e disposée en face 4, d'une nature différente.

Si effectivement la mise en place de deux couches à propriétés low-e sur le vitrage sur deux faces différentes permet de diminuer avantageusement le coefficient de transmission énergétique U, les travaux menés par la demanderesse ont montré qu'elle s'accompagne également d'une baisse sensible de son Facteur Solaire mesuré.

L'objet de la présente invention est de résoudre les problèmes précédemment exposés, en proposant un vitrage isolant présentant des propriétés d'isolation thermiques renforcées, en particulier des valeurs de U inférieures à 1,1, voire à 1,0, tant en conservant un facteur solaire élevé.

Plus particulièrement, la présente invention se rapporte à un vitrage multiple à propriétés d'isolation thermique selon la revendication 1.

Selon l'invention, le deuxième empilement ne comprend pas de couche fonctionnelle métallique.

Selon une première réalisation possible, la présente invention se rapporte à un double vitrage à propriétés d'isolation thermique selon la revendication 2.

Selon ce mode, la face 4 du deuxième substrat constitue donc la paroi intérieure du vitrage, sur laquelle est déposé ledit deuxième empilement.

Selon une autre réalisation, la présente invention se rapporte à un triple vitrage selon la revendication 3.

Selon ce mode, la face 6 du troisième substrat constitue donc la paroi intérieure du vitrage, sur laquelle est déposé ledit deuxième empilement.

Par « une couche constituée essentiellement d'oxyde de silicium » il est entendu au sens de la présente description une couche comprenant de l'oxygène et du silicium et constituée à plus de 80% en poids d'oxyde de silicium, sur la base de la formulation de l'oxyde simple SiO₂, et éventuellement au moins un autre élément de préférence choisi dans le groupe constitué par Al, C, N, B, Sn, Zn et de manière très préférée parmi Al, B ou C.

De préférence ladite couche constituée essentiellement d'oxyde de silicium est constituée à plus de 90% en poids d'oxyde de silicium selon la définition précédente, toujours sur la base de la formulation de l'oxyde simple SiO₂. Par souci de simplification, une telle couche est également appelée couche d'oxyde de silicium dans la présente description.

Par « substrat de verre », on entend au sens de la présente invention une feuille de verre unique ou un ensemble de feuilles de verre, notamment deux feuilles de verre, liées entre elle en une structure dite feuilletée par un intercalaire du type polymère, notamment de PVB (polyvinylbutyral) selon les techniques bien connues dans le domaine.

Par « empilement » au sens de la présente invention, il faut comprendre un ensemble d'au moins deux couches superposées, à partir de la surface d'un substrat verrier.

Par empilement à propriété bas émissive, on entend au sens de la présente invention tout empilement connu dans le domaine pour réduire l'émissivité normale εₙ d'une paroi de verre munie dudit empilement, au sens décrit dans la publication de référence : *Techniques de l'ingénieur, « Vitrage à isolation thermique renforcée », C3635.*

En particulier, pour le premier empilement à propriété bas émissive comprenant au moins une couche fonctionnelle métallique, on choisira avantageusement des empilements conduisant à une émissivité normale εₙ inférieure ou égale à 0,1, de préférence inférieure ou égale à 0,08, voire très avantageusement inférieure ou égale à 0,05.

Pour le deuxième empilement à propriété bas émissive comprenant au moins une couche fonctionnelle constituée par un oxyde transparent conducteur, on choisira avantageusement des empilements conduisant à une émissivité normale εₙ inférieure ou égale à 0,7, de préférence inférieure ou égale à 0,5, voire très avantageusement inférieure ou égale à 0,4.

Par « au contact » on entend au sens de l'invention qu'aucune autre couche intermédiaire n'est interposée entre les deux couches mentionnées.

Selon des modes de réalisations préférés de tels vitrages multiples, qui peuvent bien entendu être combinés entre eux, le cas échéant :
- La couche comprenant essentiellement de l'oxyde de silicium est au contact de la couche de TCO. Sans sortir cependant du cadre de l'invention, une couche intermédiaire peut également être disposée dans ledit deuxième empilement entre la couche de TCO et la couche comprenant essentiellement de l'oxyde de silicium, par exemple en nitrure de silicium, en nitrure d'aluminium ou en un mélange de ces deux matériaux.
- La couche constituée essentiellement d'oxyde de silicium est la couche la plus externe du deuxième empilement de couches à propriété bas émissif.
- L'épaisseur physique de la couche constituée essentiellement d'oxyde de silicium est comprise entre 40 et 90 nm, de préférence entre 40 et 80 nm.
- La couche métallique est une couche d'argent ou d'un alliage à base d'argent.
- La couche d'oxyde transparent conducteur est choisie parmi l'oxyde mixte d'étain et d'indium (ITO) en particulier avec un rapport massique In₂O₃/SnO₂ supérieur ou égal à 90/10, le ZnO dopé à l'aluminium (AZO), le ZnO dopé au gallium (GZO), le ZnO codopé au gallium et à l'aluminium (AGZO), l'oxyde de titane dopé au niobium (TiO2:Nb).
- L'épaisseur physique de la couche métallique est comprise entre 6 et 16 nm et l'épaisseur de la couche d'oxyde transparent conducteur est comprise entre 50 et 400 nm.
- L'épaisseur physique de la couche métallique est comprise entre 6 et 10 nm et l'épaisseur de la couche d'oxyde transparent conducteur est comprise entre 80 et 300 nm.
- L'épaisseur physique de la couche métallique est comprise entre 10 et 12 nm et l'épaisseur de la couche d'oxyde transparent conducteur est comprise entre 50 et 200 nm.
- L'épaisseur physique de la couche métallique est comprise entre 12 et 16 nm et l'épaisseur de la couche d'oxyde transparent conducteur est comprise entre 100 et 400 nm.
- Ledit deuxième empilement de couches à propriété bas émissif comprend, en dessous de la couche fonctionnelle en oxyde transparent conducteur, au moins une couche diélectrique à base de nitrure, notamment en nitrure de silicium et/ou de nitrure d'aluminium.
- Le deuxième empilement de couches à propriété bas émissif présente la succession des couches suivantes, à partir de la surface du substrat : Verre/nitrure de silicium/oxyde de silicium /ITO/éventuellement nitrure de silicium/ oxyde de silicium, des couches intermédiaires supplémentaires pouvant être insérées entre ces différentes couches.

L'invention se rapporte également à un substrat selon la revendication 13

La présente demande décrit également l'utilisation d'un substrat tel que décrit précédemment pour la fabrication d'un vitrage multiple isolant, ledit substrat constituant la paroi intérieure dudit vitrage.

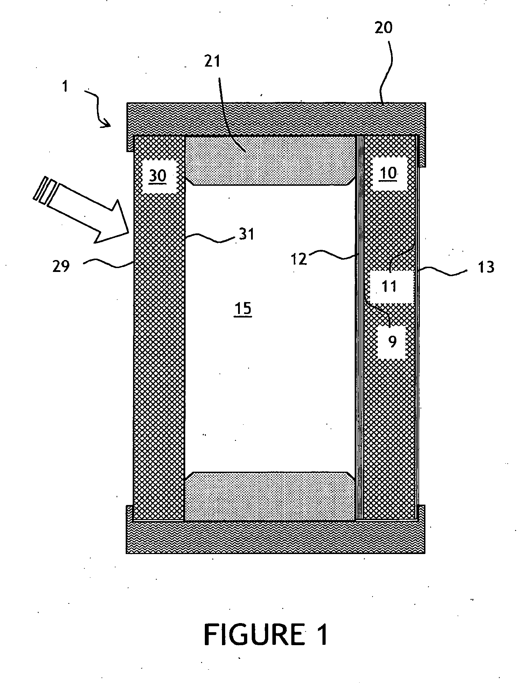

Les détails et caractéristiques avantageuses de l'invention ressortent des exemples non limitatifs suivants, illustrés à l'aide de la figure 1 qui schématise la réalisation d'un double vitrage 1 (DGU) constitué de deux feuilles de verre, constituant chacune un substrat 10, 30. Les deux substrats sont séparées, maintenus solidaires et en vis-à-vis par des espaceurs et des cadres 20, 21, l'ensemble délimitant un espace clos rempli par une lame de gaz intermédiaire 15. Selon l'invention, le gaz peut être de l'air, de l'argon ou du Krypton (ou un mélange de ces gaz).

Une première feuille de verre (substrat 30) est tournée vers l'extérieur lorsque l'on considère le sens incident de la lumière solaire entrant dans le bâtiment, illustré par la double flèche orientée sur la figure de la gauche vers la droite. Sur la figure 1, cette feuille n'est revêtue sur sa face arrière 31 tournée vers la lame de gaz intermédiaire d'aucun revêtement. Sa face avant 29 (dite « face 1 »), qui constitue également la paroi extérieure du vitrage 1, peut être nue ou alternativement être revêtue d'un autre revêtement du type autonettoyant tel que décrit dans la publication EP 850204 ou encore du type anticondensation, tel que décrit dans les publications WO2007/115796 ou WO2009/106864.

L'autre feuille de verre, orientée la plus à l'intérieur du bâtiment lorsque l'on considère le sens incident de la lumière solaire entrant celui-ci, constitue le deuxième substrat 10. Ce substrat 10 est revêtu sur sa face avant 9 tournée vers la lame de gaz intermédiaire d'un revêtement isolant à propriétés bas émissif constitué d'un empilement 12 de couches comprenant au moins une couche fonctionnelle (low-e) à base d'argent, d'un type connu, (l'empilement bas émissif à l'argent est ainsi en face intérieure dite « face 3 » du double vitrage).

La face arrière 11 du substrat 10, qui constitue également la paroi intérieure du vitrage 1, est revêtue d'un autre empilement 13 de couches minces à propriété bas émissif, du type précédemment décrit, comprenant au moins une couche fonctionnelle constituée par un oxyde transparent conducteur.

Dans ces figures, les proportions entre les épaisseurs des différentes couches ne sont pas rigoureusement respectées afin de faciliter leur lecture.

Sans sortir du cadre de l'invention l'empilement 12 pourrait également être disposé en face 2 du double vitrage 1.

L'invention et ses avantages seront mieux compris à la lecture des exemples non limitatifs qui suivent.

Dans tous les exemples ci-après les empilements de couches minces à propriétés bas-émissif sont déposés sur des substrats en verre sodo-calcique clair, commercialisés sous la référence PLANILUX® par la société déposante.

Pour tous les exemples ci-après, pour le montage en double vitrage, les empilements de couches minces ont été positionnés respectivement en face 3 et 4, c'est-à-dire sur le substrat de verre le plus à l'intérieur du bâtiment lorsque l'on considère le sens incident de la lumière solaire entrant dans le bâtiment.

Tous les double vitrages DGU assemblés selon les exemples présentent la configuration : 4-16 (Ar 90%)-4, c'est-à-dire qu'ils sont constitués de deux feuilles de verre PLanilux® transparentes de 4 mm séparées par une lame de gaz intermédiaire comprenant 90 % d'argon et 10 % d'air, d'une épaisseur de 16 mm, le tout étant maintenu solidaire par une structure de châssis 20 et des espaceurs 21.

Dans tous les exemples, l'empilement bas-émissif disposé en face 3 du DGU est celui décrit précédemment (tableau 1) comme représentatif des empilements actuellement commercialisés.

Conformément à l'invention l'empilement bas-émissif disposé en face 4 du DGU est un empilement bas émissif dont la couche fonctionnelle est un oxyde transparent conducteur TCO. Dans les exemples, afin de montrer les avantages liés à la mise en oeuvre de la présente invention, on a fait varier la nature des différentes couches présentes dans l'empilement.

A l'exception des empilements comprenant du SnO2 dopé fluor comme couche fonctionnelle, toutes les couches des deux empilements peuvent être déposées de façon connue selon les techniques classiques du dépôt par pulvérisation magnétron de cibles, sous vide.

Le tableau 3 ci-dessous résume les conditions générales de dépôt par pulvérisation magnétron des différentes couches des exemples 1 à 3:

**Tableau 3**

| Couche | Cible employée | Pression de dépôt | Gaz |
|---|---|---|---|
| Si₃N₄ | Si:Al à 92:8 % wt | 1,5.10⁻³ mbar | Ar /(Ar + N₂) à 45 % |
| TiO₂ | TiOₓ avec x de l'ordre de 1,9 | 1,5.10⁻³ mbar | Ar /(Ar + O₂) à 95 % |
| SnZnSbOₓ | SnZn:Sb à 34:65:1 wt | 2.10⁻³ mbar | Ar /(Ar + O₂) à 58 % |
| ZnO | Zn:Al à 98:2 % wt | 2.10⁻³ mbar | Ar /(Ar + O₂) à 52 % |
| Ti | Ti métallique | 2.10⁻³ mbar | Ar à 100 % |
| Ag | Ag | 4.10⁻³ mbar | Ar à 100 % |
| SiO₂ | Si:Al à 92:8 % wt | 2.10⁻³ mbar | Ar /(Ar + O₂) à 70 % |
| ITO | In₂O₃/SnO₂ (90/10 massique) | 2.10⁻³ mbar | Ar /(Ar + O₂) à 95 % |

L'oxyde mixte d'étain et d'indium (ITO) présente un rapport In₂O₃/SnO₂ massique sensiblement égal à 90/10.

Les couches de SnO2 : F, des couches de SiOC et de SiO₂ des exemples 4 à 9 sont obtenues par des techniques classiques de dépôt CVD. Le taux de dopage en Fluor est de 1% atomique environ.

Les exemples 1 à 3 décrivent des empilements comparatifs et selon l'invention dans lesquels le TCO de l'empilement en face 4 du double vitrage est de l'oxyde d'indium et d'étain ITO.

Les exemples 4 à 9 décrivent des empilements comparatifs dans lesquels le TCO de l'empilement en face 4 du double vitrage est du SnO₂:F.

L'exemple 10 décrit un empilement comparatif dans lequel la couche finale d'oxyde de silicium est seulement de 12 nanomètres, en dehors de critères selon l'invention.

### Exemple 1 (comparatif):

Dans cet exemple, l'empilement en face 4 du DGU est :

| Verre / | Si₃N₄/ | ITO / | Si₃N₄ |
|---|---|---|---|
| *Epaisseur (nm)* | 20 | 70 | 20 |

### Exemple 2 (selon l'invention):

Dans cet exemple, l'empilement en face 4 du DGU est :

| Verre / | Si₃N₄/ | ITO / | SiO₂ |
|---|---|---|---|
| *Epaisseur (nm)* | 20 | 70 | 75 |

### Exemple 3 (selon l'invention):

Dans cet exemple, l'empilement en face 4 du DGU est :

| Verre / | Si₃N₄/ | SiO₂/ | ITO / | SiO₂ |
|---|---|---|---|---|
| *Epaisseur (nm)* | 20 | 15 | 70 | 75 |

Le tableau 4 qui suit regroupe les résultats pour les vitrages des exemples 1 à 3 :

**Tableau 4**

| Exemple | Facteur Solaire (%) | Facteur U (W.m⁻².K⁻¹) |
|---|---|---|
| 1 | 60,9 | 1,0 |
| 2 | 63 | 1,0 |
| 3 | 63,2 | 1,0 |

### Exemples 4 à 6 (comparatifs):

Dans ces exemples, l'empilement en face 4 du DGU est :

| Exemple | Verre / | SiOC / | SnO₂ :F |
|---|---|---|---|
| *4* | *Epaisseur (nm)* | 30 | 320 |
| *5* | | 30 | 260 |
| *6* | | 30 | 160 |

### Exemples 7 à 9 (hors invention):

Dans ces exemples, l'empilement en face 4 du DGU est :

| Exemple | Verre / | SiOC / | SnO₂ :F / | SiO₂ |
|---|---|---|---|---|
| 7 | *Epaisseur (nm)* | 30 | 320 | 80 |
| 8 | | 30 | 260 | 80 |
| 9 | | 30 | 160 | 80 |

Le tableau 5 qui suit regroupe les résultats pour les doubles vitrages des exemples 4 à 9 :

**Tableau 5**

| Exemple | Facteur Solaire (%) | Facteur U (W.m⁻².K⁻¹) |
|---|---|---|
| 4 | 59,4 | 1,0 |
| 5 | 59,6 | 1,0 |
| 6 | 60,3 | 1,0 |
| 7 | 61,8 | 1,0 |
| 8 | 62,1 | 1,0 |
| 9 | 62,6 | 1,0 |

Les résultats reportés dans les tableaux 4 et 5 montrent que les doubles vitrages équipés des deux empilements low-e selon l'invention présentent les meilleures performances cumulées en ce qui concerne le coefficient de transmission thermique U et le facteur Solaire.

### Exemple 10 (comparatif):

Dans cet exemple, l'empilement en face 4 du DGU est :

| Verre / | Si₃N₄/ | ITO / | SiO₂ |
|---|---|---|---|
| *Epaisseur (nm)* | 20 | 70 | 12 |

Pour cet exemple comparatif, il est mesuré un facteur solaire égal à 59,6 % et un facteur U de 1,0 W.m⁻².K⁻¹. Par comparaison des exemples 1 à 10 qui précèdent, on peut voir que les vitrages selon l'invention permettent l'obtention des facteurs solaires les plus élevés, pour un même coefficient de transmission thermique.

La présente invention est décrite dans ce qui précède à titre d'exemple. Il est entendu que l'homme du métier est à même de réaliser différentes variantes de l'invention sans pour autant sortir du cadre de la présente invention. En particulier, la présente invention peut être appliquée à des triples vitrages.

## Revendications

1. Vitrage multiple à propriétés d'isolation thermique, obtenu par l'association d'une pluralité de substrats de verre (10, 30) séparés par des lames de gaz (15), la face avant (29) du premier substrat (30) définissant la paroi extérieure du vitrage et la face arrière (11) du dernier substrat (10) définissant la paroi intérieure dudit vitrage,
ledit vitrage multiple incorporant:
- un premier empilement de couches (12) à propriété bas émissive comprenant au moins une couche fonctionnelle métallique,
- un deuxième empilement (13) de couches à propriété bas émissive comprenant au moins une couche fonctionnelle constituée par un oxyde transparent conducteur,
dans lequel ledit deuxième empilement (13) est déposé sur la face arrière (11) du dernier substrat (10), constituant la paroi intérieure du vitrage,
dans lequel ledit premier empilement est déposé sur l'autre face (9) dudit dernier substrat ou sur la face (31) du substrat précédent en regard de ladite autre face (9), et
dans lequel une couche comprenant de l'oxygène et du silicium et constituée à plus de 80% en poids d'oxyde de silicium, sur la base de la formulation de l'oxyde simple SiO₂, d'épaisseur physique comprise entre 40 et 90 nm, est disposée, dans ledit deuxième empilement (13) de couches à propriété bas émissive et par rapport à la surface dudit dernier substrat de verre (10), au dessus de la couche fonctionnelle en oxyde transparent conducteur, dans lequel la couche d'oxyde transparent conducteur est choisie parmi l'oxyde mixte d'étain et d'indium (ITO) en particulier dans lequel le rapport massique In₂O₃/SnO₂ est supérieur ou égal à 90/10, le ZnO dopé à l'aluminium (AZO), le ZnO dopé au gallium (GZO), le ZnO codopé au gallium et à l'aluminium (AGZO), l'oxyde de titane dopé au niobium (TiO2:Nb), et dans lequel l'épaisseur physique de la couche métallique est comprise entre 6 et 16 nm et l'épaisseur de la couche d'oxyde transparent conducteur est comprise entre 50 et 400 nm.

2. Vitrage multiple à propriétés d'isolation thermique, obtenu par l'association d'une pluralité de substrats de verre (10, 30) séparés par des lames de gaz (15), la face avant (29) du premier substrat (30) définissant la paroi extérieure du vitrage et la face arrière (11) du dernier substrat (10) définissant la paroi intérieure dudit vitrage,
ledit vitrage multiple incorporant:
- un premier empilement de couches (12) à propriété bas émissive comprenant au moins une couche fonctionnelle métallique,
- un deuxième empilement (13) de couches à propriété bas émissive comprenant au moins une couche fonctionnelle constituée par un oxyde transparent conducteur,
dans lequel ledit deuxième empilement (13) est déposé sur la face arrière (11) du dernier substrat (10), constituant la paroi intérieure du vitrage,
dans lequel ledit premier empilement est déposé sur l'autre face (9) dudit dernier substrat ou sur la face (31) du substrat précédent en regard de ladite autre face (9), et
dans lequel une couche comprenant de l'oxygène et du silicium et constituée à plus de 80% en poids d'oxyde de silicium, sur la base de la formulation de l'oxyde simple SiO₂,d'épaisseur physique comprise entre 40 et 90 nm, est disposée, dans ledit deuxième empilement (13) de couches à propriété bas émissive et par rapport à la surface dudit dernier substrat de verre (10), au dessus de la couche fonctionnelle en oxyde transparent conducteur,
dans lequel la couche d'oxyde transparent conducteur est choisie parmi l'oxyde mixte d'étain et d'indium (ITO) en particulier dans lequel le rapport massique In₂O₃/SnO₂ est supérieur ou égal à 90/10, le ZnO dopé à l'aluminium (AZO), le ZnO dopé au gallium (GZO), le ZnO codopé au gallium et à l'aluminium (AGZO), l'oxyde de titane dopé au niobium (TiO2:Nb) et
dans lequel la couche constituée essentiellement d'oxyde de silicium est la couche la plus externe du deuxième empilement de couches à propriété bas émissif.

3. Double vitrage à propriétés d'isolation thermique selon la revendication 1 ou 2, obtenu par l'association de deux substrats de verre séparés par une lame de gaz, le premier substrat délimitant les faces 1 et 2 du vitrage, le deuxième substrat délimitant les faces 3 et 4 du vitrage, incorporant:
- un premier empilement de couches à propriété bas émissive comprenant au moins une couche fonctionnelle métallique, ledit empilement étant déposé en face 2 ou 3 du double vitrage,
- un deuxième empilement de couches à propriété bas émissive comprenant au moins une couche fonctionnelle constituée par un oxyde transparent conducteur, ledit empilement étant déposé sur le deuxième substrat en face 4 du double vitrage,
dans lequel une couche constituée essentiellement d'oxyde de silicium est disposée, en face 4 et par rapport à la surface du deuxième substrat de verre, au dessus de la couche fonctionnelle en oxyde transparent conducteur, dans ledit deuxième empilement de couchés à propriété bas émissive.

4. Triple vitrage à propriétés d'isolation thermique selon la revendication 1 ou 2, obtenu par l'association dé trois substrats de verre séparés par des lames de gaz, le premier substrat délimitant les faces 1 et 2 du vitrage, le deuxième substrat délimitant les faces 3 et 4 du vitrage, ledit troisième substrat délimitant les faces 5 et 6 du vitrage, incorporant :
- un premier empilement de couches à propriété bas émissive comprenant au moins une couche fonctionnelle métallique, ledit empilement étant déposé en face 4 ou 5 du triple vitrage,
- un deuxième empilement de couches à propriété bas émissive comprenant au moins une couche fonctionnelle constituée par un oxyde transparent conducteur, ledit empilement étant déposé sur le troisième substrat en face 6 du triple vitrage,
dans lequel une couche constituée essentiellement d'oxyde de silicium est disposée, en face 6 et par rapport à la surface du troisième substrat de verre, au dessus de la couche fonctionnelle en oxyde transparent conducteur, dans ledit deuxième empilement de couches à propriété bas émissive.

5. Vitrage multiple selon l'une des revendications 1 à 4, dans lequel la couche constituée essentiellement d'oxyde de silicium est au contact de la couche de TCO.

6. Vitrage multiple selon l'une des revendications précédentes, dans lequel l'épaisseur physique de la couche constituée essentiellement d'oxyde de silicium est comprise entre 40 et 80 nm.

7. Vitrage multiple selon l'une des revendications précédentes, dans lequel la couche métallique est une touche d'argent ou d'un alliage à base d'argent.

8. Vitrage multiple selon l'une des revendications précédentes, dans lequel l'épaisseur physique de la couche métallique est comprise entre 6 et 10 nm et dans lequel l'épaisseur de la couche d'oxyde transparent conducteur est comprise entre 80 et 300 nm.

9. Vitrage multiple selon l'une des revendications 1 à 7, dans lequel l'épaisseur physique de la couche métallique est comprise entre 10 et 12 nm et dans lequel l'épaisseur de la couche d'oxyde transparent conducteur est comprise entre 50 et 200 nm.

10. Vitrage multiple selon l'une des revendications 1 à 7, dans lequel l'épaisseur physique de la couche métallique est comprise entre 12 et 16 nm et dans lequel l'épaisseur de là couche d'oxyde transparent conducteur est comprise entre 100 et 400 nm.

11. Vitrage multiple selon l'une des revendications précédentes, dans lequel ledit deuxième empilement de couches à propriété bas émissif comprend, en dessous de la couche fonctionnelle en oxyde transparent conducteur, au moins une couche diélectrique à base de nitrure, notamment en nitrure de silicium et/ou de nitrure d'aluminium:

12. Vitrage multiple selon l'une des revendications précédentes, dans lequel ledit deuxième empilement de couches à propriété bas émissif présente la succession des couches suivantes, à partir de la surface du substrat : Verre/nitrure de silicium/oxyde de silicium /ITO/éventuellement nitrure de silicium/ oxyde de silicium, des couches intermédiaires supplémentaires pouvant être insérées entre ces différentes couches.

13. Vitrage multiple selon l'une des revendications précédentes, dans lequel ledit deuxième empilement de couches à propriété bas émissif présente la succession de couches suivantes, à partir de la surface du substrat : Verre/oxyde ou oxycarbure de silicium/ SnO_{2:}F/oxyde de silicium, dés couches intermédiaires supplémentaires pouvant être insérées entre ces différentes couches.

14. Substrat susceptible d'être utilisé pour constituer la paroi intérieure d'un vitrage multiple selon l'une des revendications précédentes, comprenant :
- un premier empilement de couches à propriété bas émissive comprenant au moins une couche fonctionnelle métallique, ledit empilement étant déposé sur une première face dudit substrat,
- un deuxième empilement de couches à propriété bas émissive comprenant au moins une couche fonctionnelle constituée par un oxyde transparent conducteur, ledit empilement étant déposé sur la deuxième face dudit substrat, dans lequel une couche constituée essentiellement d'oxyde de silicium d'épaisseur physique comprise entre 40 et 90 nm est disposée au-dessus de la couche fonctionnelle en oxyde transparent conducteur, par rapport à la surface du substrat de verre, la couche d'oxyde transparent conducteur étant choisie parmi l'oxyde mixte d'étain et d'indium (ITO) en particulier dans lequel le rapport massique In₂O₃/SnO₂ est supérieur ou égal à 90/10, le ZnO dopé à l'aluminium (AZO), le ZnO dopé au gallium (GZO), le ZnO codopé au gallium et à l'aluminium (AGZO), l'oxyde de titane dopé au niobium (TiO2:Nb), l'épaisseur physique de la couche métallique étant comprise entre 6 et 16 nm et l'épaisseur de la couche d'oxyde transparent conducteur étant comprise entre 50 et 400.

15. Substrat susceptible d'être utilisé pour constituer la paroi intérieure d'un vitrage multiple selon l'une des revendications 1 à 13, comprenant :
- un premier empilement de couches à propriété bas émissive comprenant au moins une couche fonctionnelle métallique, ledit empilement étant déposé sur une première face dudit substrat,
- un deuxième empilement de couches à propriété bas émissive comprenant au moins une couche fonctionnelle constituée par un oxyde transparent conducteur, ledit empilement étant déposé sur la deuxième face dudit substrat, dans lequel une couche constituée essentiellement d'oxyde de silicium d'épaisseur physique comprise entre 40 et 90 nm est disposée au-dessus de la couche fonctionnelle en oxyde transparent conducteur, par rapport à la surface du substrat de verre, la couche d'oxyde transparent conducteur étant choisie parmi l'oxyde mixte d'étain et d'indium (ITO) en particulier dans lequel le rapport massique In₂O₃/SnO₂ est supérieur ou égal à 90/10, le ZnO dopé à l'aluminium (AZO), le ZnO dopé au gallium (GZO), le ZnO codopé au gallium et à l'aluminium (AGZO), l'oxyde de titane dopé au niobium (TiO2:Nb), la couche constituée essentiellement d'oxyde de Silicium étant la couche la plus externe du deuxième empilement de couches à propriété bas émissif.

## Patentansprüche

1. Mehrfache Verglasung mit Wärmeisolationseigenschaften, die durch das Verbinden einer Mehrzahl von Glassubstraten (10, 30), die durch Gasschichten (15) getrennt sind, erhalten wird, wobei die Vorderseite (29) des ersten Substrats (30) die Außenwand der Verglasung definiert, und die Rückseite (11) des letzten Substrats (10) die Innenwand der Verglasung definiert,
wobei die mehrfache Verglasung Folgendes enthält:
- eine erste Stapelung von Schichten (12) mit niedriger Emissionseigenschaft, die mindestens eine metallische Funktionsschicht umfasst,
- eine zweite Stapelung (13) von Schichten mit niedriger Emissionseigenschaft, die mindestens eine Funktionsschicht umfasst, die aus einem leitenden durchsichtigen Oxid besteht,
wobei die zweite Stapelung (13) auf der Rückseite (11) des letzten Substrats (10), das die Innenwand der Verglasung bildet, angeordnet ist,
wobei die erste Stapelung auf der anderen Seite (9) des letzten Substrats oder auf der Seite (31) des vorhergehenden Substrats gegenüber der anderen Seite (9) angeordnet ist, und
wobei eine Schicht, die Sauerstoff und Siliziumoxid umfasst und zu mehr als 80 Gew.-% aus Siliziumoxid besteht, auf der Basis der Formulierung von einfachem Oxid SiO₂ mit einer physischen Stärke zwischen 40 und 90 nm in der zweiten Stapelung (13) von Schichten mit niedriger Emissionseigenschaft und bezüglich der Oberfläche des letzten Glassubstrats (10) oberhalb der Funktionsschicht aus leitendem durchsichtigem Oxid angeordnet ist, wobei die leitende durchsichtige Oxidschicht aus Zinn-Indium-Mischoxid (ITO), bei dem insbesondere der Masseanteil In₂O₃/SnO₂ größer oder gleich 90:10 ist, dem ZnO mit Aluminium dotiert (AZO), dem ZnO mit Gallium dotiert (GZO), dem ZnO mit Gallium und Aluminium codotiert (AGZO), dem Titanoxid mit Niobium dotiert (TiO2:Nb) ausgewählt ist,
und wobei die physische Stärke der metallischen Schicht zwischen 6 und 16 nm liegt, und die Stärke der leitenden durchsichtigen Oxidschicht zwischen 50 und 400 nm liegt.

2. Mehrfache Verglasung mit Wärmeisolationseigenschaften, die durch das Verbinden einer Mehrzahl von Glassubstraten (10, 30), die durch Gasschichten (15) getrennt sind, erhalten wird, wobei die Vorderseite (29) des ersten Substrats (30) die Außenwand der Verglasung definiert, und die Rückseite (11) des letzten Substrats (10) die Innenwand der Verglasung definiert,
wobei die mehrfache Verglasung Folgendes enthält:
- eine erste Stapelung von Schichten (12) mit niedriger Emissionseigenschaft, die mindestens eine metallische Funktionsschicht umfasst,
- eine zweite Stapelung (13) von Schichten mit niedriger Emissionseigenschaft, die mindestens eine Funktionsschicht umfasst, die aus einem leitenden durchsichtigen Oxid besteht,
wobei die zweite Stapelung (13) auf der Rückseite (11) des letzten Substrats (10), das die Innenwand der Verglasung bildet, angeordnet ist,
wobei die erste Stapelung auf der anderen Seite (9) des letzten Substrats oder auf der Seite (31) des vorhergehenden Substrats gegenüber der anderen Seite (9) angeordnet ist, und
wobei eine Schicht, die Sauerstoff und Silizium umfasst und zu mehr als 80 Gew.-% aus Siliziumoxid besteht, auf der Basis der Formulierung des einfachen Oxids SiO₂ mit physischer Stärke zwischen 40 und 90 nm, in der zweiten Stapelung (13) von Schichten mit niedriger Emissionseigenschaft und bezüglich der Oberfläche des letzten Glassubstrats (10) oberhalb der Funktionsschicht aus leitendem durchsichtigem Oxid angeordnet ist,
wobei die leitende durchsichtige Oxidschicht aus dem Zinn-Indium-Mischoxid (ITO), bei dem insbesondere der Masseanteil In₂O₃/SnO₂ größer oder gleich 90:10 ist, dem ZnO mit Aluminium dotiert (AZO), dem ZnO mit Gallium dotiert (GZO), dem ZnO mit Gallium und Aluminium codotiert (AGZO), dem Titanoxid mit Niobium dotiert (TiO2:Nb) ausgewählt ist, und
wobei die im Wesentlichen aus Siliziumoxid bestehende Schicht die äußerste Schicht der zweiten Stapelung von Schichten mit niedriger Emissionseigenschaft ist.

3. Doppelte Verglasung mit Wärmeisolationseigenschaften nach Anspruch 1 oder 2, die durch die Verbindung von zwei Glassubstraten erhalten wird, die durch eine Gasschicht getrennt sind, wobei das erste Substrat die Seiten 1 und 2 der Verglasung abgrenzt, das zweite Substrat die Seiten 3 und 4 der Verglasung abgrenzt, enthaltend:
- eine erste Stapelung von Schichten mit niedriger Emissionseigenschaft, die mindestens eine metallische Funktionsschicht umfasst, wobei die Stapelung auf Seite 2 oder 3 der doppelten Verglasung angeordnet ist,
- eine zweite Stapelung von Schichten mit niedriger Emissionseigenschaft, die mindestens eine Funktionsschicht umfasst, die aus einem leitenden durchsichtigen Oxid besteht, wobei die Stapelung auf dem zweiten Substrat auf Seite 4 der doppelten Verglasung angeordnet ist,
wobei eine Schicht, die im Wesentlichen aus Siliziumoxid besteht, auf Seite 4 und bezüglich der Oberfläche des zweiten Glassubstrats oberhalb der Funktionsschicht aus leitendem durchsichtigem Oxid in der zweiten Stapelung von Schichten mit niedriger Emissionseigenschaft angeordnet ist.

4. Dreifache Verglasung mit Wärmeisolationseigenschaften nach Anspruch 1 oder 2, die durch die Verbindung von drei Glassubstraten erhalten wird, die durch Gasschichten getrennt sind, wobei das erste Substrat die Seiten 1 und 2 der Verglasung abgrenzt, das zweite Substrat die Seiten 3 und 4 der Verglasung abgrenzt, das dritte Substrat die Seiten 5 und 6 der Verglasung abgrenzt, enthaltend:
- eine erste Stapelung von Schichten mit niedriger Emissionseigenschaft, die mindestens eine metallische Funktionsschicht umfasst, wobei die Stapelung auf Seite 4 oder 5 der dreifachen Verglasung angeordnet ist,
- eine zweite Stapelung von Schichten mit niedriger Emissionseigenschaft, die mindestens eine Funktionsschicht umfasst, die aus einem leitenden durchsichtigen Oxid besteht, wobei die Stapelung auf dem dritten Substrat auf Seite 6 der dreifachen Verglasung angeordnet ist,
wobei eine Schicht, die im Wesentlichen aus Siliziumoxid besteht, auf Seite 6 und bezüglich der Oberfläche des dritten Glassubstrats oberhalb der Funktionsschicht aus leitendem durchsichtigem Oxid in der zweiten Stapelung von Schichten mit niedriger Emissionseigenschaft angeordnet ist.

5. Mehrfache Verglasung nach einem der Ansprüche 1 bis 4, wobei die Schicht, die im Wesentlichen aus Siliziumoxid besteht, mit der TCO-Schicht in Berührung ist.

6. Mehrfache Verglasung nach einem der vorstehenden Ansprüche, wobei die physische Stärke der Schicht, die im Wesentlichen aus Siliziumoxid besteht, zwischen 40 und 80 nm liegt.

7. Mehrfache Verglasung nach einem der vorstehenden Ansprüche, wobei die metallische Schicht eine Schicht aus Silber oder aus einer Legierung auf Silberbasis ist.

8. Mehrfache Verglasung nach einem der vorstehenden Ansprüche, wobei die physische Stärke der metallischen Schicht zwischen 6 und 10 nm liegt und die Stärke der leitenden durchsichtigen Oxidschicht zwischen 80 und 300 nm liegt.

9. Mehrfache Verglasung nach einem der Ansprüche 1 bis 7, wobei die physische Stärke der metallischen Schicht zwischen 10 und 12 nm liegt und die Stärke der leitenden durchsichtigen Oxidschicht zwischen 50 und 200 nm liegt.

10. Mehrfache Verglasung nach einem der Ansprüche 1 bis 7, wobei die physische Stärke der metallischen Schicht zwischen 12 und 16 nm liegt und die Stärke der leitenden durchsichtigen Oxidschicht zwischen 100 und 400 nm liegt.

11. Mehrfache Verglasung nach einem der vorstehenden Ansprüche, wobei die zweite Stapelung von Schichten mit niedriger Emissionseigenschaft unterhalb der Funktionsschicht aus leitendem durchsichtigem Oxid mindestens eine dielektrische Schicht auf Nitridbasis umfasst, insbesondere aus Siliziumnitrid und/oder aus Aluminiumnitrid.

12. Mehrfache Verglasung nach einem der vorstehenden Ansprüche, wobei die zweite Stapelung von Schichten mit niedriger Emissionseigenschaft die Abfolge der folgenden Schichten ausgehend von der Oberfläche des Substrats aufweist: Glas/Siliziumnitrid/Siliziumoxid/ITO/ eventuell Siliziumnitrid/Siliziumoxid, wobei zusätzliche Zwischenschichten zwischen diese unterschiedlichen Schichten eingefügt sein können.

13. Mehrfache Verglasung nach einem der vorstehenden Ansprüche, wobei die zweite Stapelung von Schichten mit niedriger Emissionseigenschaft die Abfolge der folgenden Schichten ausgehend von der Oberfläche des Substrats aufweist: Glas/Siliziumoxid oder Siliziumoxicarbid/SnO₂:F/Siliziumoxid, wobei zusätzliche Zwischenschichten zwischen diese unterschiedlichen Schichten eingefügt sein können.

14. Substrat, das zum Bilden der Innenwand einer mehrfachen Verglasung nach einem der vorstehenden Ansprüche verwendet werden kann, das Folgendes umfasst:
- eine erste Stapelung von Schichten mit niedriger Emissionseigenschaft, die mindestens eine metallische Funktionsschicht umfasst, wobei die Stapelung auf einer ersten Seite des Substrats angeordnet ist,
- eine zweite Stapelung von Schichten mit niedriger Emissionseigenschaft, die mindestens eine Funktionsschicht umfasst, die aus einem leitenden durchsichtigen Oxid besteht, wobei die Stapelung auf der zweiten Seite des Substrats angeordnet ist, wobei eine Schicht, die im Wesentlichen aus Siliziumdioxid mit physischer Stärke zwischen 40 und 90 nm besteht, oberhalb der Funktionsschicht aus leitendem durchsichtigem Oxid bezüglich der Oberfläche des Glassubstrats angeordnet ist, wobei die leitende durchsichtige Oxidschicht aus Zinn-Indium-Mischoxid (ITO), bei dem insbesondere der Masseanteil In₂O₃/SnO₂ größer oder gleich 90:10 ist, dem ZnO mit Aluminium dotiert (AZO), dem ZnO mit Gallium dotiert (GZO), dem ZnO mit Gallium und Aluminium codotiert (AGZO), dem Titanoxid mit Niobium dotiert (TiO2:Nb) ausgewählt ist, wobei die physische Stärke der metallischen Schicht zwischen 6 und 16 nm liegt und die Stärke der Schicht aus leitendem durchsichtigem Oxid zwischen 50 und 400 liegt.

15. Substrat, das zum Bilden der Innenwand einer mehrfachen Verglasung nach einem der Ansprüche 1 bis 13 verwendet werden kann, das Folgendes umfasst:
- eine erste Stapelung von Schichten mit niedriger Emissionseigenschaft, die mindestens eine metallische Funktionsschicht umfasst, wobei die Stapelung auf einer ersten Seite des Substrats angeordnet ist,
- eine zweite Stapelung von Schichten mit niedriger Emissionseigenschaft, die mindestens eine Funktionsschicht umfasst, die aus einem leitenden durchsichtigen Oxid besteht, wobei die Stapelung auf der zweiten Seite des Substrats angeordnet ist, wobei eine Schicht, die im Wesentlichen aus Siliziumdioxid mit physischer Stärke zwischen 40 und 90 nm besteht, oberhalb der Funktionsschicht aus leitendem durchsichtigem Oxid bezüglich der Oberfläche des Glassubstrats angeordnet ist, wobei die leitende durchsichtige Oxidschicht aus Zinn-Indium-Mischoxid (ITO), bei dem insbesondere der Masseanteil In₂O₃/SnO₂ größer oder gleich 90:10 ist, dem ZnO mit Aluminium dotiert (AZO), dem ZnO mit Gallium dotiert (GZO), dem ZnO mit Gallium und Aluminium codotiert (AGZO), dem Titanoxid mit Niobium dotiert (TiO2:Nb) ausgewählt ist, wobei die Schicht, die im Wesentlichen aus Siliziumoxid besteht, die äußerste Schicht der zweiten Stapelung von Schichten mit niedriger Emissionseigenschaft ist.

## Claims

1. A multiple glazing unit with thermal isolation properties, obtained by associating a plurality of glass substrates (10, 30) separated by gas-filled cavities (15), the front face (29) of the first substrate (30) defining the external wall of the glazing unit and the back face (11) of the last substrate (10) defining the internal wall of said glazing unit,
said multiple glazing unit incorporating:
- a first low-E film multilayer (12) comprising at least one functional metallic film; and
- a second low-E film multilayer (13) comprising at least one functional film made of a transparent conductive oxide,
in which said second multilayer (13) is deposited on the back face (11) of the last substrate (10), forming the internal wall of the glazing unit,
in which said first multilayer is deposited on the other face (9) of said last substrate or on the face (31) of the preceding substrate facing said other face (9), and
in which a film comprising oxygen and silicon and comprising more than 80 wt% silicon oxide, based on the simple oxide formulation SiO₂ and having a physical thickness lying between 40 and 90 nm, is placed, in said second low-E film multilayer (13) and relative to the surface of said last glass substrate (10), above the functional film made of transparent conductive oxide, wherein the transparent conductive oxide film is chosen from mixed indium tin oxide (ITO) in particular ITO the In₂O₃/SnO₂ mass ratio of which is 90/10 or more, aluminum-doped ZnO (AZO), gallium-doped ZnO (GZO), gallium and aluminum codoped ZnO (AGZO), and niobium-doped titanium oxide (TiO₂:Nb), and
wherein the physical thickness of the metallic film is between 6 and 16 nm and the thickness of the transparent conductive oxide film is between 50 and 400 nm.

2. A multiple glazing unit with thermal isolation properties, obtained by associating a plurality of glass substrates (10, 30) separated by gas-filled cavities (15), the front face (29) of the first substrate (30) defining the external wall of the glazing unit and the back face (11) of the last substrate (10) defining the internal wall of said glazing unit,
said multiple glazing unit incorporating:
- a first low-E film multilayer (12) comprising at least one functional metallic film; and
- a second low-E film multilayer (13) comprising at least one functional film made of a transparent conductive oxide,
in which said second multilayer (13) is deposited on the back face (11) of the last substrate (10), forming the internal wall of the glazing unit,
in which said first multilayer is deposited on the other face (9) of said last substrate or on the face (31) of the preceding substrate facing said other face (9), and
in which a film comprising oxygen and silicon and comprising more than 80 wt% silicon oxide, based on the simple oxide formulation SiO₂ and having a physical thickness lying between 40 and 90 nm, is placed, in said second low-E film multilayer (13) and relative to the surface of said last glass substrate (10), above the functional film made of transparent conductive oxide, wherein the transparent conductive oxide film is chosen from mixed indium tin oxide (ITO) in particular ITO the In₂O₃/SnO₂ mass ratio of which is 90/10 or more, aluminum-doped ZnO (AZO), gallium-doped ZnO (GZO), gallium and aluminum codoped ZnO (AGZO), and niobium-doped titanium oxide (TiO₂:Nb), and wherein the film made essentially of silicon oxide is the outermost film of the second low-E film multilayer.

3. A double glazing unit with thermal isolation properties according to claim 1 or 2, obtained by associating two glass substrates separated by a gas-filled cavity, the first substrate defining faces 1 and 2 of the glazing unit, the second substrate defining faces 3 and 4 of the glazing unit, incorporating:
- a first low-E film multilayer comprising at least one functional metallic film, said multilayer being deposited on face 2 or 3 of the double glazing unit; and
- a second low-E film multilayer comprising at least one functional film made of a transparent conductive oxide, said multilayer being deposited on the second substrate on face 4 of the double glazing unit,
in which a film made essentially of silicon oxide is placed, on face 4 and, relative to the surface of the second glass substrate, on the functional film made of transparent conductive oxide, in said second low-E film multilayer.

4. A triple glazing unit with thermal insulation properties according to claim 1 or 2, obtained by associating three glass substrates separated by gas-filled cavities, the first substrate defining faces 1 and 2 of the glazing unit, the second substrate defining faces 3 and 4 of the glazing unit, said third substrate defining faces 5 and 6 of the glazing unit, incorporating:
- a first low-E film multilayer comprising at least one functional metallic film, said multilayer being deposited on face 4 or 5 of the triple glazing unit; and
- a second low-E film multilayer comprising at least one functional film made of a transparent conductive oxide, said multilayer being deposited on the third substrate on face 6 of the triple glazing unit,
in which a film made essentially of silicon oxide is placed, on face 6 and, relative to the surface of the third glass substrate, on the functional film made of transparent conductive oxide, in said second low-E film multilayer.

5. The multiple glazing unit as claimed in one of claims 1 to 4, in which the film made essentially of silicon oxide makes contact with the TCO film.

6. The multiple glazing unit as claimed in one of the preceding claims, in which the physical thickness of the film made essentially of silicon oxide is between 40 and 80 nm.

7. The multiple glazing unit as claimed in one of the preceding claims, in which the metallic film is a silver film or a silver-based alloy film.

8. The multiple glazing unit as claimed in one of the preceding claims, in which the physical thickness of the metallic film is between 6 and 10 nm and in which the thickness of the transparent conductive oxide film is between 80 and 300 nm.

9. The multiple glazing unit as claimed in claim 1 to 7, in which the physical thickness of the metallic film is between 10 and 12 nm and in which the thickness of the transparent conductive oxide film is between 50 and 200 nm.

10. The multiple glazing unit as claimed in claims 1 to 7, in which the physical thickness of the metallic film is between 12 and 16 nm and in which the thickness of the transparent conductive oxide is between 100 and 400 nm.

11. The multiple glazing unit as claimed in one of the preceding claims, in which said second low-E film multilayer comprises, under the functional film made of transparent conductive oxide, at least one nitride-based dielectric film, especially made of silicon nitride and/or aluminum nitride.

12. The multiple glazing unit as claimed in one of the preceding claims, in which said second low-E film multilayer includes the following films in succession, from the surface of the substrate: glass/silicon nitride/silicon oxide/ITO/optionally silicon nitride/silicon oxide, additional intermediate films possibly being inserted between these various films.

13. The multiple glazing unit as claimed in one of the preceding claims, in which said second low-E film multilayer includes the following films in succession, from the surface of the substrate: glass/silicon oxide or oxycarbide/SnO₂:F/silicon oxide, additional intermediate films possibly being inserted between these various films.

14. A substrate capable of being used to form the internal wall of a multiple glazing unit as claimed in one of the preceding claims, comprising:
- a first low-E film multilayer comprising at least one functional metallic film, said multilayer being deposited on a first face of said substrate; and
- a second low-E film multilayer comprising at least one functional film made of a transparent conductive oxide, said multilayer being deposited on the second face of said substrate, in which a film made essentially of silicon oxide having a physical thickness lying between 40 and 90 nm, is placed above the functional film made of transparent conductive oxide, relative to the surface of the glass substrate, wherein the transparent conductive oxide film is chosen from mixed indium tin oxide (ITO) in particular ITO the In₂O₃/SnO₂ mass ratio of which is 90/10 or more, aluminum-doped ZnO (AZO), gallium-doped ZnO (GZO), gallium and aluminum codoped ZnO (AGZO), and niobium-doped titanium oxide (TiO₂:Nb), and
wherein the physical thickness of the metallic film is between 6 and 16 nm and the thickness of the transparent conductive oxide film is between 50 and 400 nm.

15. A substrate capable of being used to form the internal wall of a multiple glazing unit as claimed in one of the preceding claims, comprising:
- a first low-E film multilayer comprising at least one functional metallic film, said multilayer being deposited on a first face of said substrate; and
- a second low-E film multilayer comprising at least one functional film made of a transparent conductive oxide, said multilayer being deposited on the second face of said substrate, in which a film made essentially of silicon oxide having a physical thickness lying between 40 and 90 nm, is placed above the functional film made of transparent conductive oxide, relative to the surface of the glass substrate, wherein the transparent conductive oxide film is chosen from mixed indium tin oxide (ITO) in particular ITO the In₂O₃/SnO₂ mass ratio of which is 90/10 or more, aluminum-doped ZnO (AZO), gallium-doped ZnO (GZO), gallium and aluminum codoped ZnO (AGZO), and niobium-doped titanium oxide (TiO₂:Nb), and and wherein the film made essentially of silicon oxide is the outermost film of the second low-E film multilayer.
